# EUROPEAN PATENT APPLICATION

(11) **EP 4 177 757 A1**
(43) Date of publication of application: **10.05.2023**
(21) Application number: 22205572.5
(22) Date of filing: 04.11.2022
(51) Int. Cl.: G06F 11/36

(54) **TEST RESULT MONITORING METHOD AND APPARATUS FOR AN APPLICATION PROGRAM, AND STORAGE MEDIUM**

(30) Priority: 05.11.2021 CN 202111308593
(71) Applicant: Nio Technology (Anhui) Co., Ltd, Hefei City, Anhui 230601 (CN)
(72) Inventor: XIE, Yan, Hefei City, Anhui, 230601 (CN); ZHAO, Dongxu, Hefei City, 230601 (CN); SUN, Fangli, Hefei City, Anhui, 230601 (CN); HE, Tao, Hefei City, Anhui, 230601 (CN); LI, Mingjun, Hefei City, Anhui, 230601 (CN)
(74) Representative: Vossius & Partner Patentanwälte Rechtsanwälte mbB

(57) **Abstract**

The disclosure relates to the technical field of program testing, and specifically provides a test result monitoring method and an apparatus for an application program, and a storage medium, aiming to solve the problem of how to precisely test changed code in an application program, thereby improving testing efficiency. To this end, the method of the disclosure includes: obtaining difference code of program code of an application program to be tested with respect to program code of a target application program; obtaining a code test result for the difference code based on a program test result for the application program to be tested, to monitor whether the difference code has been tested so that the difference code that has not been tested can be precisely identified for testing, where the program test result at least includes a respective result associated with each line of code in the application program to be tested. With the method, the code test result for the difference code can be obtained based on the program test result, which allows for accurate determination of whether the difference code has been tested and precise testing of the untested difference code, thereby improving testing efficiency.

## Description

### Technical Field

The disclosure relates to the technical field of program testing, and specifically provides a test result monitoring method, an apparatus and a computer-readable storage medium for application programs.

### Background

An application program tends to go through a plurality of iterations before release, to make adjustments to functionality, stability, etc. of the application program. However, code in the application program may change after each iteration, making it necessary to test the iterated application program to ensure that the changed code does not cause any unexpected problems during running of the application program. In existing solutions, an application program testing method generally uses jacoco (an application program testing tool) to test an application program, and an obtained test result can show a code test result for each line of code. However, because an application program includes a large quantity of code, manual verification fails to quickly and accurately determine whether changed code has been tested. In this case, those skilled in the art can generally only test the whole application program, and when all lines of code in the application program have been tested, this means that the changed code must have been tested. However, if not all the code has been tested, the application program may need to be tested again (even a number of times) until all the code in the application program has been tested, which undoubtedly wastes a lot of time of a testing engineer and thus leads to relatively low testing efficiency of the application program.

Accordingly, there is a need for a new test result monitoring solution for an application program in the art, in order to solve the above problem.

### Summary of the Invention

The disclosure aims to solve the above technical problem, that is, to solve or at least partially solve the problem of how to precisely test previously untested changed code in an application program during an iterative upgrade of the application program, thereby improving the testing efficiency of the application program.

In a first aspect, the disclosure provides a test result monitoring method for an application program, the method including:
obtaining difference code of program code of an application program to be tested with respect to program code of a target application program, wherein program code of the application program to be tested includes a plurality of lines of code; obtaining a code test result for the difference code based on a program test result for the application program to be tested, wherein the program test result includes a respective result associated with each of the plurality of lines of code in the application program to be tested and the code test result for the difference code is configured to determine a test status of the difference code and identify untested difference code for precise testing.

In a technical solution of the test result monitoring method for an application program, the step of obtaining a code test result for the difference code based on a program test result for the application program to be tested includes:
obtaining, a number of times within a preset time period, the program test result for the application program to be tested and the difference code of program code of the application program to be tested with respect to program code of the target application program;
obtaining, based on the program test result and the difference code that are obtained each time within the preset time period, the code test result for the difference code obtained each time; and
displaying the code test result for the difference code obtained within the preset time period.

In some embodiments where there is a plurality of preset time periods and the program test result for the application program to be tested and the difference code of program code of the application program to be tested with respect to program code of the target application program are obtained a number of times within each of the plurality of preset time periods, displaying the code test result for the difference code obtained each time within each of the plurality of preset time periods.

In a technical solution of the test result monitoring method for an application program, the method further includes obtaining, based on the program test result and the difference code that are obtained each time within the preset time period, the code test result for difference code obtained each time by the following steps:
determining, for the difference code obtained each time, a first group of lines of code in the difference code obtained at a current time, the first group of lines of code including a first plurality of changes from the difference code obtained last time within the preset time period;
determining the first group of lines of code being different from a second group of lines of code in the difference code obtained last time, the second group of lines of code including a second plurality of changes from the difference code obtained at a time that is precedent to the last time within the preset time period,; and
storing first group of lines of code and a code test result that is corresponding to the first group of lines of code in the code test result for the difference code obtained at the current time, wherein the code test result for the difference code obtained at the current time includes the code test result for one or more difference codes obtained previously within the preset time period and the code test result that is corresponding to the first group of lines of code .

In a technical solution of the test result monitoring method for an application program, the step of obtaining, a number of times within a preset time period, the program test result for the application program to be tested includes:
Receiving a release instruction for the application program to be tested and in response to a release instruction for the application program to be tested, obtaining the program test result for the application program to be tested based on a predetermined schedule spanning a duration of the preset time period, or obtaining, a number of times within the preset time period, the program test result for the application program to be tested by receiving a request from a human via a human-machine interface.

In a second aspect, the disclosure provides a test result monitoring apparatus for an application program, the apparatus including:
a difference code obtaining module configured to obtain difference code of program code of an application program to be tested with respect to program code of a target application program, wherein program code of the application program to be tested includes a plurality of lines of code; and
a test result determination module configured to obtain a code test result for the difference code based on a program test result for the application program to be tested, wherein the program test result includes a respective result associated with each of the plurality of lines of code in the application program to be tested and the code test result for the difference code is configured to determine a test status for the difference code and identify untested difference code for precise testing.

In a technical solution of the test result monitoring apparatus for an application program, the apparatus further includes a result statistical display module configured to perform the following operations:
controlling the test result determination module and the difference code obtaining module to obtain, a number of times within a preset time period, the program test result for the application program to be tested and the difference code of program code of the application program to be tested with respect to program code of the target application program;
controlling the test result determination module to obtain, based on the program test result and the difference code that are obtained each time, the code test result for the difference code obtained each time; and
displaying the code test result for the difference code obtained each time within the preset time period.

In some embodiments where there is a plurality of preset time periods and the program test result for the application program to be tested and the difference code of program code of the application program to be tested with respect to program code of the target application program are obtained a number of times within each of the plurality of preset time periods, displaying the code test result for the difference code obtained each time within each of the plurality of preset time periods.

In a technical solution of the test result monitoring apparatus for an application program, the result statistical display module is further configured to obtain the code test results for the difference code within the preset time period by the following steps:
determining, for the difference code obtained each time, a first group of lines of code in the difference code obtained at a current time, the first group of lines of code including a first plurality of changes from the difference code obtained last time within the preset time period;
determining the first group of lines of code being different from a second group of lines of code in the difference code obtained last time, the second group of lines of code including a second plurality of changes from the difference code obtained at a time that is precedent to the last time within the preset time period,; and
storing the first group of lines of code and a code test result that is corresponding to the first group of lines of code in the code test result for the difference code obtained at the current time, wherein the code test result for the difference code obtained at the current time includes the code test result for one or more difference codes obtained previously within the preset time period and the code test result that is corresponding to the first group of lines of code .

In a technical solution of the test result monitoring apparatus for an application program, the test result determination module is further configured to perform the following operation:
Receiving a release instruction for the application program to be tested and in response to the received release instruction for the application program to be tested, obtaining the program test result for the application program to be tested based on a predetermined schedule spanning a duration of, or obtaining, a number of times within the preset time period, the program test result for the application program to be tested by receiving a request from a human via a human-machine interface.

In a third aspect, a control apparatus is provided. The control apparatus includes a processor and a storage apparatus coupled with and readable by the processor, the storage apparatus stores a set of instructions and a plurality of lines of program code of an application program, where the set of instructions are executed by the processor to perform test result monitoring for the application program according to any one of the technical solutions of the test result monitoring method for an application program as described above.

In a fourth aspect, a computer-readable storage medium is provided. The computer-readable storage medium has a plurality of lines of program code stored therein, where the program code is adapted to be loaded and run by a processor to execute the test result monitoring method for an application program according to any one of the technical solutions of the test result monitoring method for an application program as described above.

By using any of the above technical solutions, the herein-disclosed approach therefore advantageously obtains difference code of program code of an application program to be tested with respect to program code of a target application program, and then obtain a code test result for the difference code based on a program test result for the application program to be tested, to monitor whether the difference code has been tested and precisely test difference code that has not been tested. By means of the foregoing method, the difference code is compared with the program test result, so that the code test result for the difference code is directly and accurately obtained, that is, whether the code in the application program has been tested is accurately determined. On this basis, because a testing engineer can accurately determine whether the difference code has been tested, the testing engineer can precisely test difference code that has not been tested, or stop testing after determining that the difference code has been tested, thereby improving the testing efficiency of the application program.

### Brief Description of the Drawings

The disclosed content of the disclosure will become more readily understood with reference to the accompanying drawings. Those skilled in the art readily understand that the accompanying drawings are merely for illustrative purposes and are not intended to limit the protection scope of the disclosure. In addition, similar components are represented by similar numbers in the figures, in which:
FIG. 1 is a schematic flowchart of a test result monitoring method for an application program according to an embodiment of the disclosure.
FIG. 2 is a schematic flowchart of obtaining a code test result for difference code according to an embodiment of the disclosure.
FIG. 3 is a schematic flowchart of obtaining program test results and difference code within a preset time period according to an embodiment of the disclosure.
FIG. 4 is a schematic flowchart of obtaining code test result for difference code within a preset time period according to an embodiment of the disclosure.
FIG. 5 is a schematic flowchart of monitoring a test result for a software product according to another embodiment of the disclosure.
FIG. 6 is a schematic block diagram of a test result monitoring apparatus for an application program according to an embodiment of the disclosure.

### List of reference numerals:

61: Difference code obtaining module; 62: Test result determination module.

### Detailed Description of Embodiments

Some embodiments of the disclosure are described below with reference to the accompanying drawings. Those skilled in the art should understand that these embodiments are only used to explain the technical principles of the disclosure and are not intended to limit the scope of protection of the disclosure.

In the description of the disclosure, a "module" or "processor" may include hardware, software, or a combination thereof. A module may include a hardware circuit, various suitable sensors, a communication port, a memory, a software part (such as program code), or a combination of software and hardware. The processor may be a central processing unit, a microprocessor, a graphics processing unit, a digital signal processor, or any other suitable processor. The processor has data and/or signal processing functions. The processor may be implemented in software, hardware, or a combination thereof. A non-transitory computer-readable storage medium includes any suitable medium that can store program code, such as a magnetic disk, a hard disk, an optical disc, a flash memory, a read-only memory, or a random access memory.

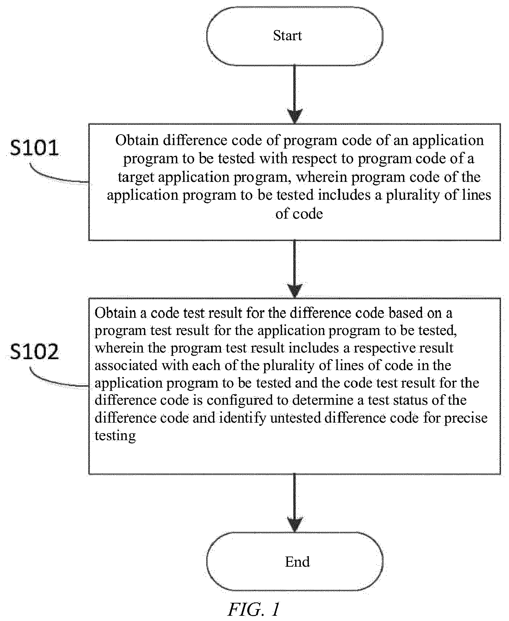

Referring to FIG. 1, FIG. 1 is a schematic flowchart of a test result monitoring method for an application program according to an embodiment of the disclosure. As shown in FIG. 1, the test result monitoring method for an application program in this embodiment of the disclosure includes steps S101 to S102 below.

Step S101: obtain difference code of program code of an application program to be tested with respect to program code of a target application program.

An application program refers to a computer program that includes one or more lines of program code and that can implement a function (for example, a function of facial detection).

The application program to be tested refers to a new application program based on the target application with changes to a part of the target application's program code.

It should be noted that the application program to be tested and the target application program are relative instead of being independent of or unrelated to each other. For example, the entire code of an application program includes code 1, code 2, and code 3 in its first version, and has code 4 and code 5 added after the application program is iterated to its second version, that is, the entire code of the application program includes code 1, code 2, code 3, code 4 and code 5 in the second version. In this case, the application program of the second version needs to be tested. The application program of the second version is the application program to be tested, and the application program of the first version is the target application program.

Specifically, the program code of the application program to be tested can be compared with the program code of the target application program by using Gitlab software (a code management platform) in the technical field, to obtain the difference code. With continued reference to the foregoing examples, the application program of the first version is compared with the application program of the second version to obtain that the differences in the code are code 4 and code 5, therefore obtaining the difference code 4 and the difference code 5. It should be noted that although the foregoing examples show that the difference code can be obtained by using Gitlab, this does not mean that the difference code can be obtained only by using Gitlab in the embodiment of the disclosure. Those skilled in the art can obtain the difference code by using any other software (or application program or any method) that can be used to obtain the difference code.

Step S102: obtain a code test result for the difference code based on a program test result for the application program to be tested, to monitor whether the difference code has been tested and precisely test difference code that has not been tested.

The program test result includes a respective code test result associated with each line of code in the application program to be tested. The code test result for the code may determine a test status of the difference code and therefore indicate whether the code has been tested.

In this embodiment, an application program can be tested by using jacoco software in the technical field. The program test result refers to a test result obtained by testing the application program to be tested. In the technical field, testing an application program may also be referred to as testing coverage. The program test result at least includes the respective code test result associated with each line of code in the application program to be tested. The code test result refers to a test result for a line of code, that is, regarding whether the line of code has been tested. By comparing the program test result with the difference code, it can be determined which difference code has been tested and which has not, thereby monitoring whether difference code has been tested. After determining which difference code has not been tested, the code that has not been tested may also be precisely tested by using software such as jacoco. It should be noted that although the foregoing example shows that the program test result for the application program and/or precise testing of the difference code that has not been tested can be obtained by using jacoco, this does not mean that the program test result and/or the precise testing of the difference code that has not been tested can be obtained only by using jacoco in the embodiments of the disclosure. Those skilled in the art can obtain the program test result and/or precisely test the difference code that has not been tested by using any other software (or application program or any method) that can be used to obtain the program test result.

With continued reference to the example in step S101 above, the program test result may include a code test result associated with code 1, code 2, code 3, code 4, and code 5, respectively. For example, code 1 has been tested, code 2 has been tested, code 3 has been tested, code 4 has been tested, and code 5 has not been tested. In this case, it can be detected that difference code 5 has not been tested.

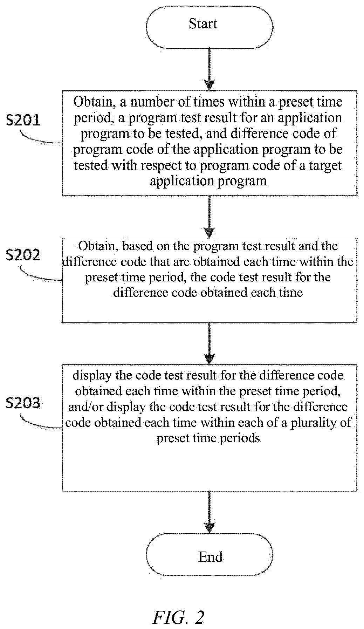

In an implementation of this embodiment, the code test result for the difference code may be obtained through steps S201 to S203 shown in FIG. 2:
Step S201: obtain, a number of times within a preset time period, the program test result for the application program to be tested, and the difference code of program code of the application program to be tested with respect to program code of the target application program.
Step S202: obtain, based on the program test result and the difference code that are obtained each time within the preset time period, the code test result for the difference code obtained each time.
Step S203: display the code test result for the difference code obtained each time within the preset time period. In some embodiments where there is a plurality of preset time periods and the program test result for the application program to be tested and the difference code of program code of the application program to be tested with respect to program code of the target application program are obtained a number of times within each of the plurality of preset time periods, Step S203 may display the code test result for the difference code obtained each time within each of the plurality of preset time periods.

The preset time period refers to a time period in which the program test result and the difference code are obtained. For example, the preset time period may be one day. In other words, the program test result for the application program to be tested and the difference code of program code of the application program to be tested with respect to program code of the target application program are obtained a number of times in one day.

Assuming that the preset time period is one day, that is, 24 hours, the program test result for the application program to be tested and the difference code of program code of the application program to be tested with respect to program code of the target application program can be obtained once every 8 hours. In other words, the program test result for the application program to be tested and the difference code of program code of the application program to be tested with respect to program code of the target application program are obtained three times within one day.

By statistically displaying the code test result for the difference code obtained each time within the preset time period and/or a plurality of preset time periods, a testing engineer can clearly view which code has not been tested.

In an implementation of this embodiment, the program test result for the application program to be tested may be obtained a number of times within the preset time period by the following step:
Receiving a release instruction for the application program to be tested and in response to the received release instruction for the application program to be tested, obtaining the program test result for the application program to be tested based on a predetermined schedule spanning a duration of the preset time period, or obtaining, a number of times within the preset time period, the program test result for the application program to be tested by receiving a request from a human via a human-machine interface.

Specifically, before release of the application program to be tested, a release instruction may be generated. After receiving the generated release instruction, the program test result for the application program to be tested may be obtained based on a predetermined schedule spanning a duration of the preset time period. The predetermined schedule may be every 2 hours, every 4 hours, every 8 hours, etc. With continued reference to the example in steps S201 to S203 above, 8 hours in the foregoing example may be one preset interval. Taking the preset interval of 8 hours and the preset time period of every day as an example, the predetermined schedule for obtaining the program test result for the application program to be tested is to obtain the program test result at 00:00, 8:00 and 16:00 every day after reception of the release instruction for the application program to be tested. In addition, the program test result for the application program to be tested may also be obtained a number of times within the preset time period after receiving an instruction from the human-machine interface. For example, after reception of a release instruction for the application program to be tested, an operator can issue a request through the human-machine interface to obtain the program test result for the application program to be tested at any time.

Based on the foregoing method, the testing engineer is provided with the method for obtaining the program test result for the application program to be tested in a number of different ways.

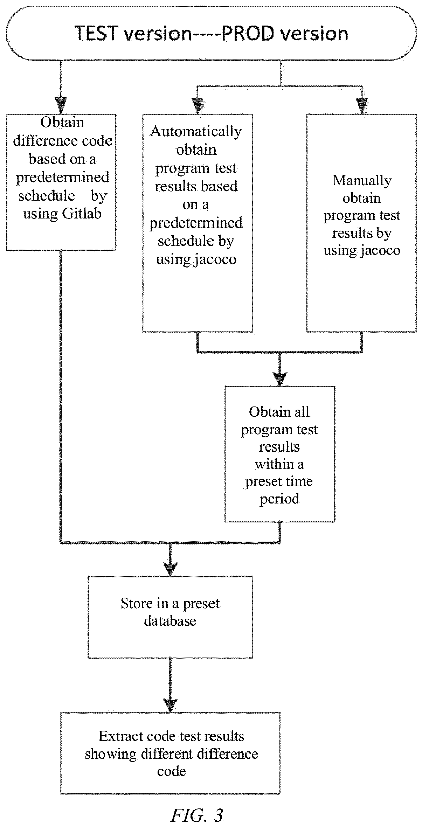

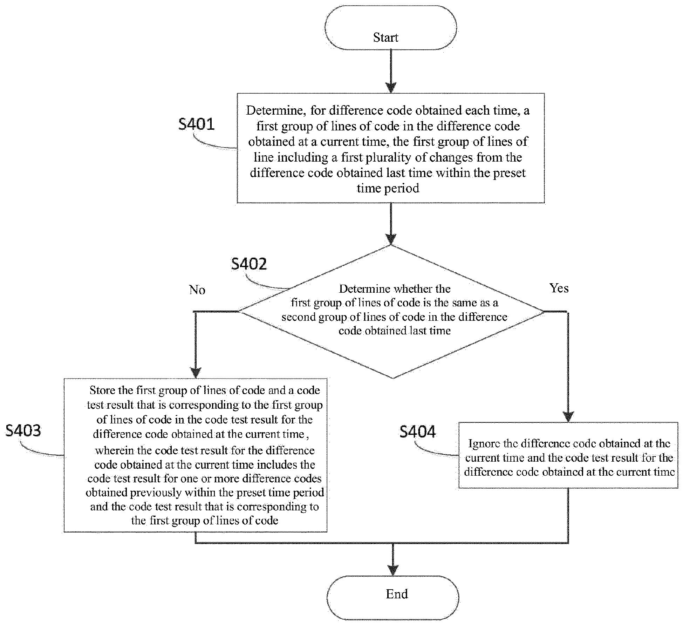

As shown in FIG. 3, after reception of the release instruction for the application program to be tested, the difference code and the program test result may be obtained by using Gitlab and jacoco respectively. "TEST version" in FIG. 3 represents the application program to be tested, and "PROD version" in FIG. 3 represents the target application program. For the program test result, the program test result for the application program to be tested may be obtained a number of times within the preset time period after receiving an instruction from the human-machine interface, that is, the program test result is obtained manually by a human. Alternatively, the program test result for the application program to be tested may be obtained within the preset time period based on a predetermined schedule , that is, the program test result for the application program to be tested is automatically obtained at predetermined intervals. After the program test result is obtained, all program test results within the preset time period can be obtained, for example, all program test results obtained in a day. Similarly, the difference code may also be automatically obtained based on the predetermined schedule (for example, at 00:00 every day). After the program test result and the difference code are obtained, the program test result and the difference code may be respectively stored in a preset database (for example, DBeaver, which is a conventional database tool in the technical field). After the difference code and the program test result are stored in the database, the difference code can be compared with the respective result associated with each line of code in the program test result to determine a code test result for the difference code and extract the code test result for the difference code for display. With continued reference to the example in step S102 above, the difference code is obtained multiple times in a given day and the code test result for the difference code obtained each time in a such day may indicate that difference code 5 has not been tested.

After the code test result for the difference code is obtained, the code test result can be statistically displayed. For example, the code test result obtained each time when the difference code is obtained in a given day can be statistically displayed on a display. Alternatively or additionally, the code test result obtained each time when the difference code is obtained in a given week can be statistically displayed, which means that the code test results for the difference code obtained in every day of the week are statistically displayed. For example, "code_diff5", which is displayed on the display, may represent a code test result for difference code 5 of the application program to be tested. For another example, as shown in Table 1 below, "Monday", "Tuesday", "Wednesday", "Thursday", "Friday", "Saturday", and "Sunday", which are displayed in columns on the display, and "code_diff5", "code_diff6", "code_diff7", "code_diff8", "code_diff9", "code_diff10", and "code_diff11", which are displayed in rows corresponding to Monday to Sunday respectively, may represent a code test result for difference code 5 on Monday, a code test result for difference code 6 on Tuesday, a code test result for difference code 7 on Wednesday, a code test result for difference code 8 on Thursday, a code test result for difference code 9 on Friday, a code test result for difference code 10 on Saturday, and a code test result for difference code 11 on Sunday. In an implementation, code test results for difference code obtained within a plurality of preset time periods may also be displayed in a cumulative manner. As shown as "Total" in the last row of Table 1 below, code test results for all difference code obtained in the week may be statistically displayed in a cumulative manner.

**Table 1**

| | |
|---|---|
| Monday | code_diff5 |
| Tuesday | code_diff6 |
| Wednesday | code_diff7 |
| Thursday | code_diff8 |
| Friday | code_diff9 |
| Saturday | code_diff10 |
| Sunday | code_diff11 |
| Total | code_diff5 |
| | code_diff6 |
| | code_diff7 |
| | code_diff8 |
| | code_diff9 |
| | code_diff10 |
| | code_diff11 |

Here, code diff refers to difference code.

In an implementation of this embodiment, the code test result for the difference code obtained each time within the preset time period may be obtained by steps S401 to S404 shown in FIG. 4:
Step S401: determine, for the difference code obtained each time, a first group of lines of code in the difference code obtained at a current time, where the first group of lines of code includes a first plurality of changes from the difference code obtained last time within the preset time period.
Step S402: determine whether the first group of lines of code is the same as a second group of lines of code in the difference code obtained last time, where the second group of lines of code includes a second plurality of changes from the difference code obtained at a time that is precedent to the last time within the preset time period, and perform step S403 if not, or perform step S404 if so.
Step S403: store the first group of lines of code and a code test result that is corresponding to the first group of lines of code in the code test result for the difference code obtained at the current time, the code test result for the difference code obtained at the current time includes the code test result for one or more difference codes obtained previously within the preset time period and the code test result that is corresponding to the first group of lines of code, thereby obtaining the code test results for the different difference codes obtained within the preset time period.
Step S404: ignore the difference code obtained at the current time and the code test result for the difference code obtained at the current time.

If the first group of lines of code in the difference code obtained at the current time within the preset time period is the same as the second group of lines of code in the difference code obtained last time within the preset time period, the difference code obtained at the current time and its corresponding code test result can be ignored. With continued reference to the example in steps S201 to S203 above, assuming that the difference code is obtained three times in one day for the application program to be tested, and difference code obtained at a first time is difference code 5, difference code obtained at a second time is difference code 5 (i.e., the same as the difference code obtained at the first time), and difference code obtained at a third time is difference code 5 (i.e., the same as the difference code obtained at the second time), it can be determined that for the difference code obtained at the second time and the difference code obtained at the first time, there does not have any changes in the code. There also does not have any changes in the code between the difference code obtained at the second time and the difference code obtained at the third time. In this case, the code test result for the difference code 5 obtained at the first time can be carried over to the code test result for the difference code 5 obtained at the second time and later carried over to the code test result for the difference code 5 obtained at the third time. In other words, the code test results obtained at the second time and the third time can be ignored because the content comes from the code test result obtained at the first time. For another example, the difference code and the corresponding code test result are obtained three times in a given day for the application program to be tested, and difference code obtained at a first time is difference code 5, difference code obtained at a second time is difference code 6, and difference code obtained at a third time is difference code 7. For the difference code obtained at the second time and the difference code obtained at the first time, there are lines of code got added or revised so as to make the difference code obtained at the second time the difference code 6 rather than the difference code 5, and the lines of code in the difference code 6 that got changed compared to the difference code 5 reflect those changes (i.e., "6-5 delta") between the difference code 6 and the difference code 5. Similarly, for the difference code obtained at the third time and the difference code obtained at the second time, there are lines of code got added or revised so as to make the difference code obtained at the third time the difference code 7 rather than the difference code 6, and the lines of code in the difference code 7 that got changed compared to the difference code 6 reflect those changes (i.e., "7-6 delta") between the difference code 7 and the difference code 6. In this case, it can be determined that the changes between the difference code 6 and difference code 5 are different from the changes between the difference code 7 and the difference code 6, the code test result for difference code 6 may include the code test result obtained at the first time (i.e., the code test result for difference code 5) that is carried over and a portion of the code test result obtained at the second time that is corresponding to the 6-5 delta. The code test result obtained at the second time (i.e., the code test result for difference code 6) is carried over and a portion of the code test result obtained at the third time that is corresponding to the 7-6 delta may be stored in the cumulative code test result for the difference code obtained in the day. In other words, the cumulative code test result for the day may include the code test result for difference code 5, the code test result for difference code 6 which may include the code test result for difference code 5, and the code test result for difference code 7 which may include the code test results for difference code 5 and difference code 6.

Through steps S401 to S404 above, even if difference code and a program test result are obtained a number of times within the preset time period, the code test result for the same changes in code between two difference codes can be retained only once, so as to avoid the problem of too many code test results from obtaining the difference code and the corresponding code test results for too many times within the preset time period, thereby eliminating the problem of information redundancy.

In an actual scenario, instead of releasing a single application program, a software product with a plurality of functions is released. Such a software product usually includes a plurality of distributed application programs that can implement different functions. Therefore, in another embodiment of the disclosure, a test result for a software product (that is, the test result includes program test results for a plurality of application programs) may also be monitored before the software product is released.

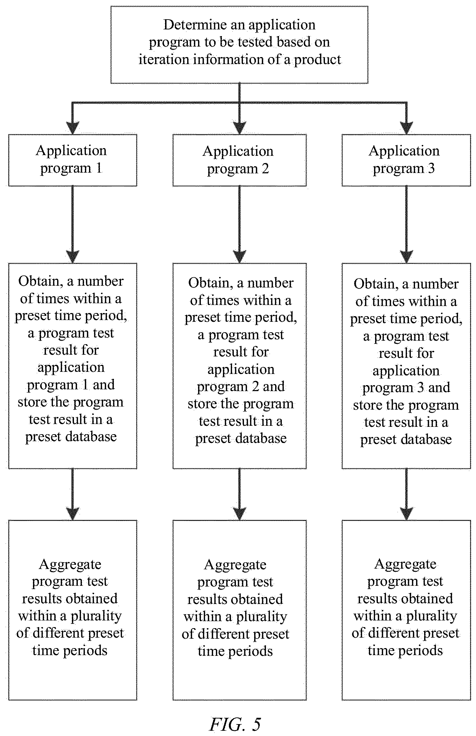

As shown in FIG. 5, after reception of a release instruction for a software product, it can be determined which application programs in the software product are affected (that is, determining application programs to be tested) based on iteration information of the software product. For example, application program 1, application program 2, and application program 3 in the software product are the application programs to be tested. For each application program, a code test result for difference code of each application program can be obtained by using steps S101 through S 102 as described above. For example, program test results for application program 1, application program 2, and application program 3 are respectively obtained at predetermined intervals within a preset time period and stored in a preset database, and then program test results obtained within a plurality of different preset time periods may further be aggregated. For a program test result that is obtained each time for an given application program, even if the program test result for the application program has been stored in the database, the program test result obtained this time may still be stored in the preset database, along with the previously stored program test result for this application program. Difference code of application program 1, application program 2, and application program 3 is then obtained at predetermined intervals within the preset time period. With regard to difference code of an application program obtained each time, if the difference code of the application program has been stored in the preset database, the previously stored difference code of the application program may be overwritten by the difference code obtained at the current time, so only the difference code of the application program obtained at the current time is stored in the database. The difference code of application program 1, application program 2, and application program 3 is respectively compared with the program test results for their corresponding application programs to obtain code test results for the difference code of application program 1, application program 2, and application program 3. The code test results for the difference code of each of application programs 1,2, and 3 obtained within a preset time period or a plurality of different preset time periods can be statistically displayed, as shown in Table 2 below.

**Table 2**

| | Application program 1 | Application program 2 | Application program 3 |
|---|---|---|---|
| Monday | Application program 1 + code_diff1 | Application program 2 + code_diff1 | Application program 3 + code_diff1 |
| Tuesday | Application program 1 + code_diff2 | Application program 2 + code_diff2 | Application program 3 + code_diff2 |
| Wednesday | Application program 1 + code_diff3 | Application program 2 + code_diff3 | Application program 3 + code_diff3 |
| Thursday | Application program 1 | Application program 2 | Application program 3 |
| | + code_diff4 | + code-diff4 | + code_diff4 |
| Friday | Application program 1 + code_diff5 | Application program 2 + code_diff5 | Application program 3 + code_diff5 |
| Saturday | Application program 1 + code_diff6 | Application program 2 + code_diff6 | Application program 3code_diff6 |
| Sunday | Application program 1 + code_diff7 | Application program 2 + code_diff7 | Application program 3 + code_diff7 |
| Total | Application program 1 + code_diff1 | Application program 2 + code_diff1 | Application program 3 + code_diff1 |
| | code_diff2 | code_diff2 | code_diff2 |
| | code_diff3 | code_diff3 | code_diff3 |
| | code_diff4 | code_diff4 | code_diff4 |
| | code_diff5 | code_diff5 | code_diff5 |
| | code_diff6 | code_diff6 | code_diff6 |
| | code_diff7 | code_diff7 | code_diff7 |

"Monday" to "Sunday" in Table 2 above are preset time periods, and "Application program 1 + code_diff" in the first column in Table 2 above are code test results for the difference code of application program 1 obtained within each of the preset time periods (within the 24 hours of Monday, within the 24 hours of Tuesday, within the 24 hours of Wednesday etc.). Similarly, the second column and the third column are the code test results for the difference code of application programs 2 and 3, respectively, obtained within each of the preset time periods (i.e., within the 24 hours of Monday, within the 24 hours of Tuesday, etc.). "Total" and "Application program 1 + code_diff1, code_diff2, code_diff3, code_diff4, code_diff5, code_diff6, code_diff7" in the last row in Table 2 above are cumulative code test results for the difference code of application program 1 obtained within the plurality of different preset time periods (Monday, Tuesday, Wednesday, etc.) Similarly, cumulative code test results for the difference code of application programs 2 and 3 obtained within the plurality of different preset time periods (Monday, Tuesday, Wednesday, etc.) are also shown in the last row in Table 2.

Based on steps S101 through S102 as described above, difference code of program code of an application program to be tested can be obtained with respect to program code of a target application program, and then a code test result for the difference code based on a program test result for the application program to be tested can be obtained to monitor whether the difference code has been tested and precisely test difference code that has not been tested. By means of the foregoing method, the difference code is compared with the program test result, so that the code test result for the difference code is directly and accurately obtained, that is, whether the code in the application program has been tested is accurately determined. On this basis, because a testing engineer can accurately determine whether the difference code has been tested, the testing engineer can precisely test difference code that has not been tested, or stop testing after determining that the difference code has been tested, thereby improving the testing efficiency of the application program.

It should be noted that although the steps are described in a specific order in the foregoing embodiments, those skilled in the art can understand that in order to achieve the effects of the disclosure, different steps are not necessarily performed in such an order, but may be performed simultaneously (in parallel) or in other orders, and these changes shall all fall within the scope of protection of the disclosure.

Further, the disclosure further provides a test result monitoring apparatus for an application program.

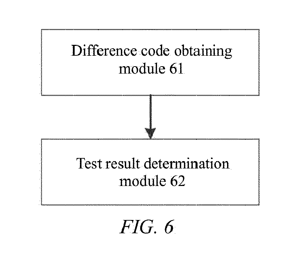

Referring to FIG. 6, FIG. 6 is a block diagram of a test result monitoring apparatus for an application program according to an embodiment of the disclosure. As shown in FIG. 6, the test result monitoring apparatus for an application program in this embodiment of the disclosure includes a difference code obtaining module 61 and a test result determination module 62. In some embodiments, one or both of the difference code obtaining module 61 and the test result determination module 62 may be combined into one module. In some embodiments, the difference code obtaining module 61 may be configured to obtain difference code of program code of an application program to be tested with respect to program code of a target application program, where program code of the application program to be tested includes a plurality of lines of code. The test result determination module 62 may be configured to obtain a code test result for the difference code based on a program test result for the application program to be tested, where the program test result includes a respective result associated with each of the plurality of lines of code in the application program to be tested and the code test result for the difference code is configured to determine a test status for the difference code and identify untested difference code for precise testing. In an implementation, for detailed description of function implementation, reference may be made to the descriptions of steps S101 and S102.

In an implementation, the test result monitoring apparatus for an application program may further include a result statistical display module, which may be configured to perform the following operations:
controlling the test result determination module and the difference code obtaining module to obtain, a number of times within a preset time period, the program test result for the application program to be tested, and the difference code of program code of the application program to be tested with respect to program code of the target application program;
controlling the test result determination module to obtain, based on the program test result and the difference code that are obtained each time, a code test result for the difference code obtained each time; and
displaying the code test result for the difference code obtained each time within the preset time period. In some embodiments where there is a plurality of preset time periods and the program test result for the application program to be tested and the difference code of program code of the application program to be tested with respect to program code of the target application program are obtained a number of times within each of the plurality of preset time periods, statistically displaying the code test result for the difference code obtained each time within each of the plurality of preset time periods.

In an implementation, for detailed description of function implementation, reference may be made to the descriptions of steps S201 through S203.

In an implementation, the result statistical display module may further be configured to obtain the code test result for the difference code obtained within the preset time period by the following steps:
determining, for the difference code obtained each time, a first group of lines of code in the difference code obtained at a current time, the first group of lines of line including a first plurality of changes from the difference code obtained last time within the preset time period.
determining the first group of lines of code being different from a second group of lines of code in the difference code obtained last time, the second group of lines of code including a second plurality of changes from the difference code obtained at a time that is precedent to the last time within the preset time period; and
storing the first group of lines of code and a code test result that is corresponding to the first group of lines of code in the code test result for the difference code obtained at the current time, wherein the code test result for the difference code obtained at the current time includes the code test result for one or more difference codes obtained previously within the preset time period and the code test result that is corresponding to the first group of lines of code .

In an implementation, for detailed description of function implementation, reference may be made to the descriptions of steps S401 through S404.

In an implementation, the test result determination module may further be configured to perform the following operation:
Receiving a release instruction for the application program to be tested and in response to the release instruction for the application program to be tested, obtaining the program test result for the application program to be tested based on a predetermined schedule spanning a duration of the preset time period, or obtaining, a number of times within the preset time period, the program test result for the application program to be tested by receiving a request from a human via a human-machine interface.

The foregoing test result monitoring apparatus for an application program is used to implement the embodiment of the test result monitoring method for an application program shown in FIG. 1. The apparatus and the method follow similar technical principles, resolve similar technical problems, and have similar technical effects. Those skilled in the art can clearly understand that, for convenience and brevity of description, for a specific working process and related descriptions of the test result monitoring apparatus for an application program, reference may be made to the content described in the embodiments of the test result monitoring method for an application program, and details are not described herein again.

Those skilled in the art can understand that all or some of the procedures in the method of the foregoing embodiment of the disclosure may also be implemented by a computer program instructing relevant hardware. The computer program may be stored in a computer-readable storage medium, and when the computer program is executed by a processor, the steps of the foregoing method embodiments can be implemented. The computer program includes computer program code, which may be in a source code form, an object code form, an executable file form, some intermediate forms, etc. The computer-readable storage medium may include: any entity or apparatus that can carry the computer program code, such as a medium, a USB flash drive, a removable hard disk, a magnetic disk, an optical disc, a computer memory, a read-only memory, a random access memory, an electrical carrier signal, a telecommunications signal, and a software distribution medium. It should be noted that the content included in the computer-readable storage medium can be appropriately added or deleted depending on requirements of the legislation and patent practice in a jurisdiction. For example, in some jurisdictions, according to the legislation and patent practice, the computer-readable storage medium does not include an electrical carrier signal and a telecommunications signal.

Further, the disclosure further provides a control apparatus. In an embodiment of the control apparatus according to the disclosure, the control apparatus includes a processor and a storage apparatus coupled with and readable by the processor. The storage apparatus may be configured to store a set of instructions and a plurality of lines of program code of an application program. The set of instructions may be a program for executing the test result monitoring method for the application program of the foregoing method embodiments. The processor may be configured to execute a program in the storage apparatus, where the program includes, but is not limited to, the program for executing the test result monitoring method for an application program of the foregoing method embodiments. For ease of description, only parts related to the embodiments of the disclosure are shown. For specific technical details that are not disclosed, reference may be made to the method part of the embodiments of the disclosure. The control apparatus may be a control apparatus device formed by various electronic devices.

Further, the disclosure further provides a computer-readable storage medium. In an embodiment of the computer-readable storage medium according to the disclosure, the computer-readable storage medium may be configured to store a program for executing the test result monitoring method for an application program of the foregoing method embodiments, and the program may be loaded and run by a processor to implement the foregoing test result monitoring method for an application program. For ease of description, only parts related to the embodiments of the disclosure are shown. For specific technical details that are not disclosed, reference may be made to the method part of the embodiments of the disclosure. The computer-readable storage medium may be a storage apparatus device formed by various electronic devices. For instance, the computer-readable storage medium in this embodiment of the disclosure is a non-transitory computer-readable storage medium.

Further, it should be understood that, because the configuration of modules is merely intended to illustrate functional units of the apparatus of the disclosure, physical devices corresponding to these modules may be the processor itself, or part of a software component of the processor, part of a hardware component of the the processor, or any combination thereof. Therefore, the number of modules in the figure is merely illustrative.

Those skilled in the art can understand that the modules in the apparatus may be adaptively split or combined. Such a split or combination of specific modules does not cause the technical solutions to depart from the principle of the disclosure. Therefore, technical solutions after any such split or combination shall all fall within the scope of protection of the disclosure.

Heretofore, the technical solutions of the disclosure have been described with reference to the preferred embodiments shown in the accompanying drawings. However, those skilled in the art can readily understand that the scope of protection of the disclosure is apparently not limited to these specific embodiments. Those skilled in the art can make equivalent changes or substitutions to the related technical features without departing from the principle of the disclosure, and all the technical solutions with such changes or substitutions shall fall within the scope of protection of the disclosure.

## Claims

1. A test result monitoring method for an application program, the method comprising:
obtaining difference code of program code of an application program to be tested with respect to program code of a target application program, wherein program code of the application program to be tested includes a plurality of lines of code; and
obtaining a code test result for the difference code based on a program test result for the application program to be tested, wherein:
the program test result includes a respective result associated with each of the plurality of lines of code in the application program to be tested; and
the code test result for the difference code is configured to determine a test status of the difference code and identify untested difference code for precise testing.

2. The method of claim 1, wherein obtaining the code test result for the difference code based on the program test result for the application program to be tested comprises:
obtaining, a number of times within a preset time period, the program test result for the application program to be tested and the difference code of program code of the application program to be tested with respect to program code of the target application program;
obtaining, based on the program test result and the difference code that are obtained each time within the preset time period, the code test result for the difference code obtained each time; and
displaying the code test result for the difference code obtained each time within the preset time period.

3. The method of claim 1 or 2, wherein obtaining the code test result for the difference code based on the program test result for the application program to be tested comprises:
obtaining, a number of times within each of a plurality of preset time periods, the program test result for the application program to be tested and the difference code of program code of the application program to be tested with respect to program code of the target application program;
obtaining, based on the program test result and the difference code that are obtained each time within each of the plurality of preset time periods, the code test result for the difference code obtained each time; and
displaying the code test result for the difference code obtained each time within each of the plurality of preset time periods.

4. The method of claim 2 or 3, wherein obtaining, based on the program test result and the difference code that are obtained each time within the preset time period, the code test result for the difference code obtained each time comprises:
determining, for the difference code obtained each time, a first group of lines of code in the difference code obtained at a current time, the first group of lines of code including a first plurality of changes from the difference code obtained last time within the preset time period;
determining the first group of lines of code being different from a second group of lines of code in the difference code obtained last time, the second group of lines of code including a second plurality of changes from the difference code obtained at a time that is precedent to the last time within the preset time period,; and
storing the first group of lines of code and a code test result that is corresponding to the first group of lines of code in the code test result for the difference code obtained at the current time, wherein the code test result for the difference code obtained at the current time includes the code test result for one or more difference codes obtained previously within the preset time period and the code test result that is corresponding to the first group of lines of code .

5. The method of claim 2, 3, or 5, wherein obtaining, a number of times within the preset time period, the program test result for the application program to be tested comprises:
in response to a release instruction for the application program to be tested, obtaining the program test result for the application program to be tested based on a predetermined schedule spanning a duration of the preset time period.

6. The method of any one of claims 2 to 5, wherein obtaining, a number of times within the preset time period, the program test result for the application program to be tested comprises receiving a request from a human via a human-machine interface.

7. A test result monitoring apparatus for an application program, the apparatus comprising:
a difference code obtaining module (61) configured to obtain difference code of program code of an application program to be tested with respect to program code of a target application program, wherein program code of the application program to be tested includes a plurality of lines of code; and
a test result determination module (62) configured to obtain a code test result for the difference code based on a program test result for the application program to be tested, wherein:
the program test result includes a respective result associated with each of the plurality of lines of code in the application program to be tested; and
the code test result for the difference code is configured to determine a test status for the difference code and identify untested difference code for precise testing.

8. The apparatus of claim 7, wherein the apparatus further comprises a result statistical display module configured to:
control the test result determination module (62) and the difference code obtaining module (61) to obtain, a number of times within a preset time period, the program test result for the application program to be tested and the difference code of program code of the application program to be tested with respect to program code of the target application program;
control the test result determination module (62) to obtain, based on the program test result and the difference code that are obtained each time, the code test result for the difference code obtained each time; and
displaying the code test result for the difference code obtained each time within the preset time period.

9. The apparatus of claim 7 or 8, wherein the apparatus further comprises a result statistical display module configured to:
control the test result determination module (62) and the difference code obtaining module (61) to obtain, a number of times within each of a plurality of preset time periods, the program test result for the application program to be tested and the difference code of program code of the application program to be tested with respect to program code of the target application program;
control the test result determination module (62) to obtain, based on the program test result and the difference code that are obtained each time within each of the plurality of preset time periods, the code test result for the difference code; and
displaying the code test result for the difference code obtained each time within each of the plurality of preset time periods.

10. The apparatus of claim 8 or 9, wherein the result statistical display module is further configured to:
determine, for the difference code obtained each time, a first group of lines of code in the difference code obtained at a current time, the first group of lines of code including a first plurality of changes from the difference code obtained last time within the preset time period;
determine the first group of lines of code being different from a second group of lines of code in the difference code obtained last time, the second group of lines of code including a second plurality of changes from the difference code obtained at a time that is precedent to the last time within the preset time period; and
store the first group of lines of code and a code test result that is corresponding to the first group of lines of code in the code test result for the difference code obtained at the current time, wherein the code test result for the difference code obtained at the current time includes the code test result for one or more difference codes obtained previously within the preset time period and the code test result that is corresponding to the first group of lines of code.
10. The apparatus of any one of claims 8 to 10, wherein the test result determination module (62) is further configured to:
in response to a release instruction for the application program to be tested, obtain the program test result for the application program to be tested based on a predetermined schedule spanning a duration of the preset time period.

11. The apparatus of any one of claims 8 to 10, wherein the test result determination module (62) is configured to:
obtain, a number of times within a preset time period, the program test result for the application program to be tested by receiving a request from a human via a human-machine interface.

12. A control apparatus, comprising:
a processor; and
a storage apparatus coupled with and readable by the processor, the storage apparatus storing a set of instructions and a plurality of lines of program code of an application program, wherein the set of instructions are executed by the processor to perform test result monitoring for the application program by:
obtaining difference code of program code of an application program to be tested with respect to program code of a target application program, wherein program code of the application program to be tested includes a plurality of lines of code; and
obtaining a code test result for the difference code based on a program test result for the application program to be tested, wherein:
the program test result includes a respective result associated with each of the plurality of lines of code in the application program to be tested; and
the code test result for the difference code is configured to determine a test status of the difference code and identify untested difference code for precise testing.
